(19) **Europäisches Patentamt**
**European Patent Office**
**Office européen des brevets**

(11) **EP 4 633 154 A1**

(12) **EUROPEAN PATENT APPLICATION**

(43) Date of publication:
**15.10.2025   Bulletin 2025/42**

(21) Application number: **24305560.5**

(22) Date of filing: **08.04.2024**

(51) International Patent Classification (IPC):
**H04N 19/12** *(2014.01)*     **H04N 19/159** *(2014.01)*
**H04N 19/174** *(2014.01)*    **H04N 19/176** *(2014.01)*
**H04N 19/70** *(2014.01)*

(52) Cooperative Patent Classification (CPC):
**H04N 19/176; H04N 19/12; H04N 19/159;
H04N 19/174; H04N 19/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **BONNINEAU, Charles
MONTREAL, H2J 1G1 (CA)**

• **NASER, Karam
35250 MOUAZE (FR)**
• **LE LEANNEC, Fabrice
35830 BETTON (FR)**
• **PURI, Saurabh
SAINT-LAZARE, J7T 0P6 (CA)**

(74) Representative: **Rittner, Karsten
Rittner & Partner
Patentanwälte mbB
Schiffgraben 17
30159 Hannover (DE)**

(54) **INTRA/INTER LOW FREQUENCY NON-SEPARABLE TRANSFORMS/ NON-SEPARABLE PRIMARY TRANSFORM FOR LOW DELAY APPLICATION**

(57)    A device (e.g., a decoder for video decoding) may obtain a slice comprising a video block. The device may determine the size of the video block. The device may determine, based on a slice characteristic of the slice and the size of the video block, an inverse transform technique associated with the video block. The device may decode the slice based on the inverse transform technique associated with the video block. For example, the slice characteristic of the slice may include a slice type. The device, based on a determination that the slice type of the slice is a predicted slice (P-slice) or a bidirectional slice (B-slice) and a determination that the size of the video block is less than a predetermined value, may determine that a non-separable inverse transform associated with the video block is to be performed.

```
┌──────────────────────────┐
│  Obtaining a current block │ ─╮ 701
└──────────────────────────┘
            │
            ▼
┌──────────────────────────┐
│   Obtaining a transform    │ ─╮ 702
└──────────────────────────┘
            │
            ▼
┌──────────────────────────┐
│   Applying the selected    │ ─╮ 703
│        transform           │
└──────────────────────────┘
```

**FIG. 10**

EP 4 633 154 A1

## Description

## BACKGROUND

Video coding systems may be used to compress digital video signals, e.g., to reduce the storage and/or transmission bandwidth needed for such signals. Video coding systems may include, for example, block-based, wavelet-based, and/or object-based systems.

## SUMMARY

Systems, methods, and instrumentalities are disclosed for a device configured for one or more of video coding (e.g., encoding and/or decoding), distribution, or consumption.

In examples, a device (e.g., a decoder for video decoding) may obtain a slice comprising a video block. The device may determine the size of the video block. The device may determine, based on a slice characteristic of the slice and the size of the video block, an inverse transform technique associated with the video block. The device may decode the video block based on the determined inverse transform technique associated with the video block. The inverse transform technique may include, for example, a separable inverse transform and/or a non-separable inverse transform associated with the video block.

In examples, the slice characteristic of the slice may include a slice type. The device, based on a determination that the slice type of the slice is a predicted slice (P-slice) or a bidirectional slice (B-slice) and a determination that the size of the video block is less than a predetermined value, may determine that a non-separable inverse transform associated with the video block is to be performed.

In examples, wherein the slice characteristic of the slice may include a slice type. The device, based on a determination that the slice type of the slice is a bidirectional slice (B-slice) instead of a predicted slice (P-slice) or an intra-slice (I-slice) and a determination that the size of the video block is less than a predetermined value, may determine that a non-separable inverse transform associated with the video block is to be performed.

In examples, the slice characteristic of the slice may include a temporal depth associated with the slice. The device, based on a determination that the temporal depth associated with the slice is less than a value, and a determination that the size of the video block is less than a predetermined value, may determine that a non-separable inverse transform associated with the video block is to be performed.

In examples, the slice characteristic of the slice may include a temporal depth associated with the slice. The device, based on a determination that the temporal depth associated with the slice is equal to or greater than a value, and a determination that the size of the video block is less than a predetermined value, may determine that a non-separable inverse transform associated with the video block is not to be performed. In some examples, the slice characteristic of the slice may include a template layer associated with the slice.

In examples, the device may receive a high-level syntax element indicator that indicates, for a video block that is to be inter-predicted, a non-separable inverse transform is to be used based on a size of the video block. The high-level syntax element indicator may be a first high-level syntax element indicator. The device may receive a second high-level syntax element that indicates, for a video block that is to be intra-predicted, a non-separable inverse transform is to be used based on a size of the video block that is to be intra-predicted.

In examples, a device (e.g., an encoder for video encoding) may obtain a slice comprising a video block. The device may determine the size of the video block. The device may determine, based on a slice characteristic of the slice and the size of the video block, a transform technique associated with the video block. The device may encode the slice based on the determined transform technique associated with the video block. The transform technique may include, for example, a separable transform and/or a non-separable transform associated with the video block.

In examples, the slice characteristic of the slice may include a slice type. The device, based on a determination that the slice type of the slice is a predicted slice (P-slice) or a bidirectional slice (B-slice) and a determination that the size of the video block is less than a predetermined value may determine that a non-separable transform associated with the video block is to be performed.

In examples, wherein the slice characteristic of the slice may include a slice type. The device, based on a determination that the slice type of the slice is a bidirectional slice (B-slice) instead of a predicted slice (P-slice) or an intra-slice (I-slice) and a determination that the size of the video block is less than a predetermined value, may determine that a non-separable transform associated with the video block is to be performed.

In examples, the slice characteristic of the slice may include a temporal depth associated with the slice. The device, based on a determination that the temporal depth associated with the slice is less than a value, and a determination that the size of the video block is less than a predetermined value, may determine that a non-separable transform associated with the video block is to be performed.

In examples, the slice characteristic of the slice may include a temporal depth associated with the slice. The device, based on a determination that the temporal depth associated with the slice is equal to or greater than a value, and a determination that the size of the video block is less than a predetermined value, may determine that may determine that a non-separable transform associated with the video block is not to be performed. In some examples, the slice characteristic of the slice may include a template layer associated with the slice.

In examples, the device may send a high-level syntax element indicator that indicates, for a video block that is to be inter-predicted, a non-separable transform is to be used based on a size of the video block. The high-level syntax element indicator may be a first high-level syntax element indicator. The device may send a second high-level syntax element that indicates, for a video block that is to be intra-predicted, a non-separable transform is to be used based on a size of the video block that is to be intra-predicted.

Systems, methods, and instrumentalities described herein may involve a decoder. In some examples, the systems, methods, and instrumentalities described herein may involve an encoder. In some examples, the systems, methods, and instrumentalities described herein may involve a signal (e.g., from an encoder and/or received by a decoder). Video data (e.g., a video bitstream) may comprise an indication of a transform of a residual coefficient as described herein. A computer-readable medium may include instructions for causing one or more processors to perform methods described herein. A computer program product may include instructions which, when the program is executed by one or more processors, may cause the one or more processors to carry out the methods described herein.

## BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 illustrates an example video encoder.

FIG. 3 illustrates an example video decoder.

FIG. 5 illustrates an example of a region of interest (ROI) for low frequency non-separable transforms (LFNST)16.

FIG. 6 illustrates an example of an ROI for LFNST8.

FIG. 7 illustrates an example of non-separable primary transform (NSPT) applied to a block (e.g., a small block) and an example of LFNST is applied for the rest.

FIG. 8 illustrates an example of Group Of Picture (GoP) structure employed in low delay coding configurations.

FIG. 9 represents schematically an example allowing reducing a complexity of LFNST and NSPT in an encoding module.

FIG. 10 represents schematically an example allowing reducing a complexity of LFNST and NSPT in a decoding module.

## DETAILED DESCRIPTION

A more detailed understanding may be had from the following description, given by way of example in conjunction with the accompanying drawings.

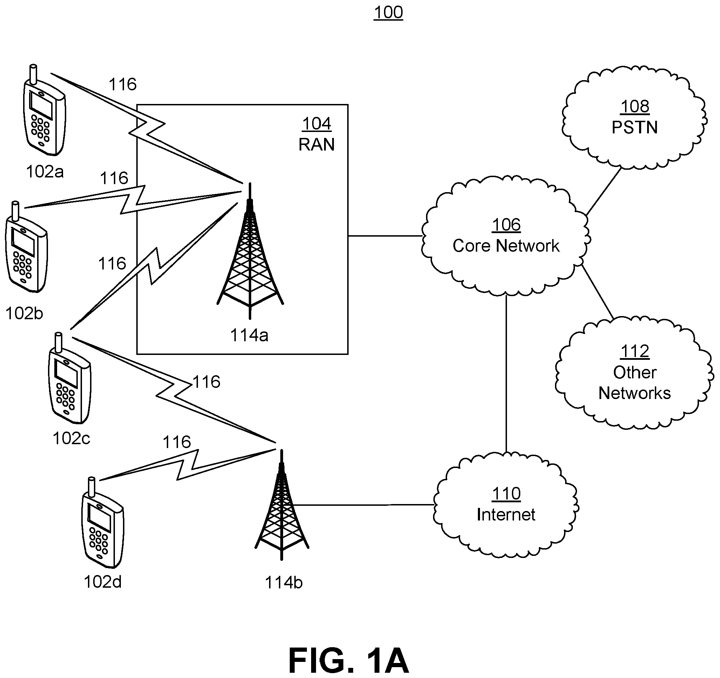

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

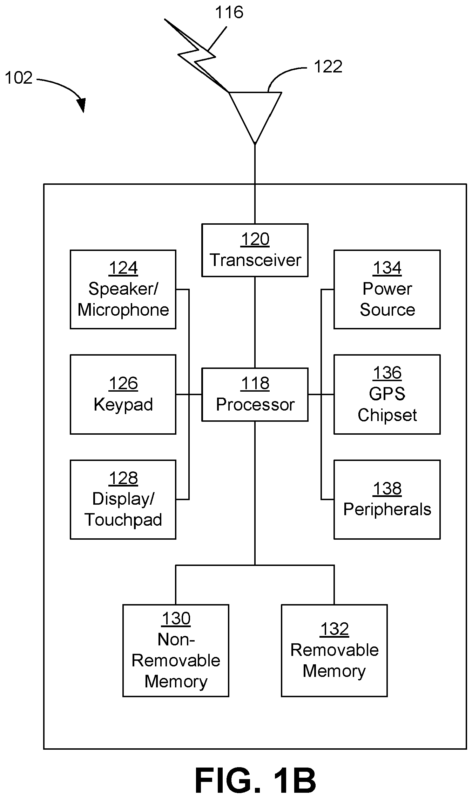

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

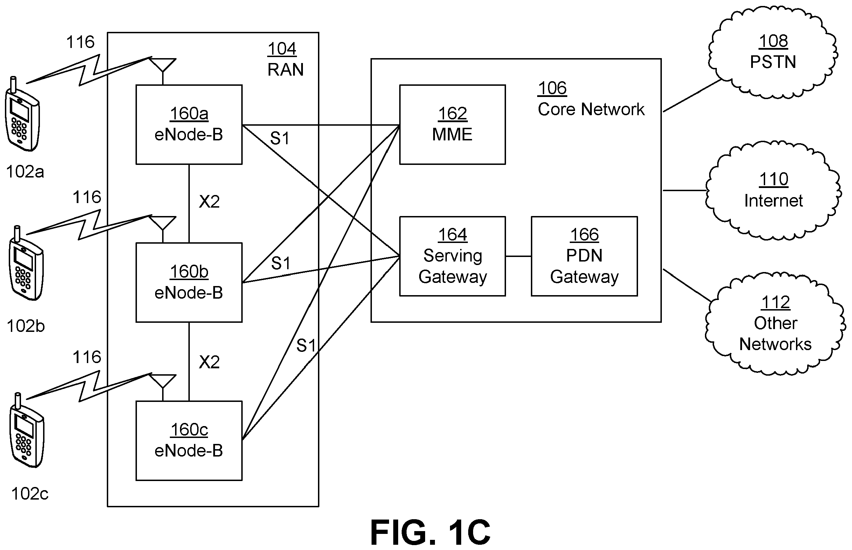

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11 af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11 ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11 ah is 6 MHz to 26 MHz depending on the country code.

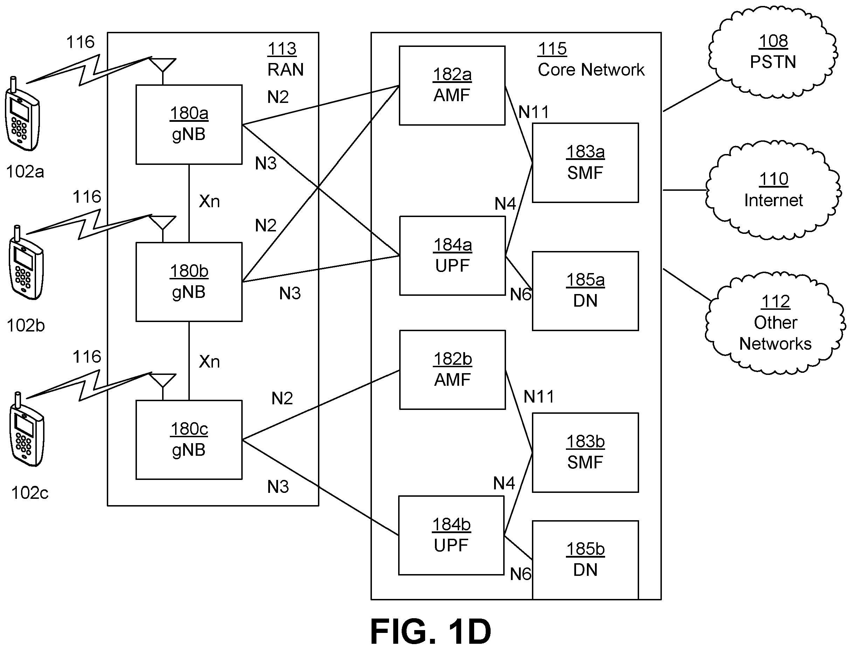

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc.

Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

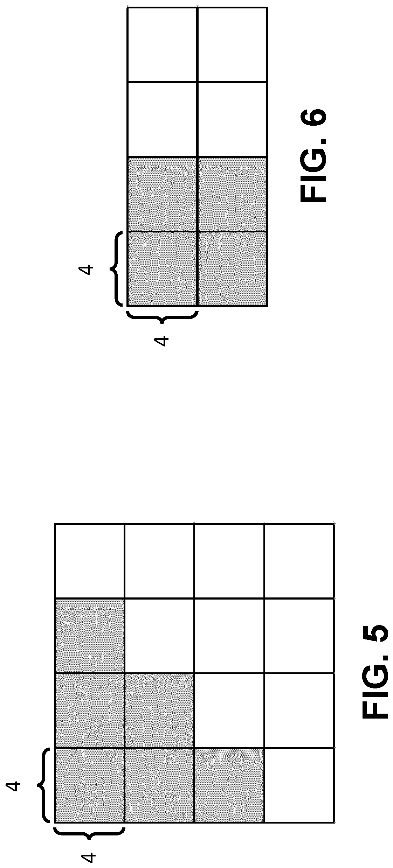

The aspects described and contemplated in this application may be implemented in many different forms. FIGS. 5-10 described herein may provide some examples, but other examples are contemplated. The discussion of FIGS. 5-10 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

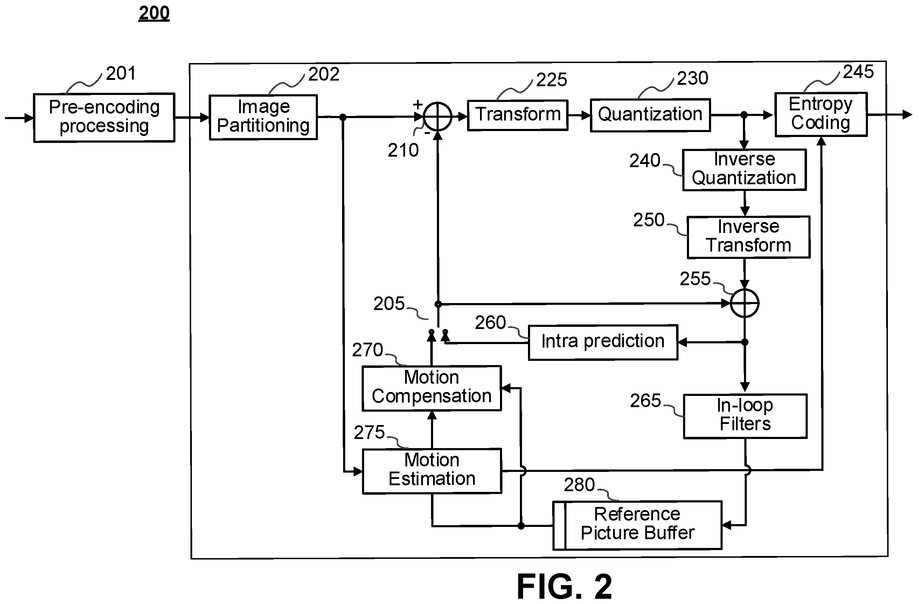

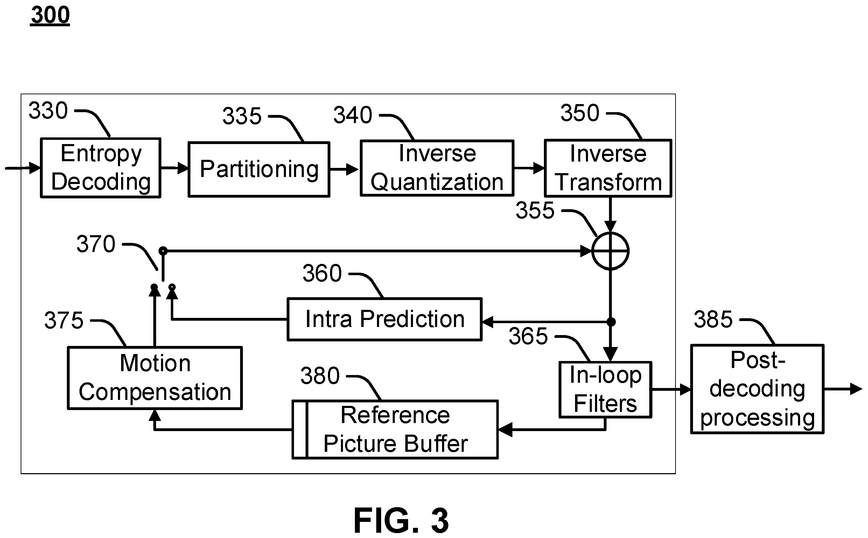

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether pre-existing or future-developed, and extensions of any such standards and recommendations. Unless indicated otherwise, or technically precluded, the aspects described in this application may be used individually or in combination.

Various numeric values are used in examples described the present application, such as 0,1, 2, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block. The prediction residuals are then transformed (225) and quantized (230). When the prediction mode is selected, the residual block is transformed during a step 225. In some implementations, a plurality of type of transforms can be applied to a transformed residual block. Indeed, in addition to DCT-II, a Multiple Transform Selection (MTS) scheme is used for both inter and intra predicted blocks. It uses multiple selected transforms from the DCT-VIII/DST-VII.

Another scheme related to the transform called Low-frequency non-separable transform (LFNST) has been proposed. LFNST is applied between a forward primary transform (i.e. the usual transform of step 225) and a quantization (corresponding to a step 230). LFNST is applied only to blocks for which an INTRA prediction had been selected.

LFNST defined a plurality of LFNST sets. A (e.g., each) set may include a plurality of transform kernels. For instance, 35 LFNST sets may be defined, each comprising 3 transform kernels. A (e.g., each) LFNST kernel may have a given dimension. In some examples, LFNST may define 3 kernels with the following dimension: LFNST4: $16 \times 16$; LFNST8: $32 \times 64$; LFNST16: $32 \times 96$. In LFNST, a (e.g., each) LFNST set may be associated to a range of INTRA mode. For instance, the DC and planar mode may be associated to one LFNST set. Once a LFNST set had been identified for an INTRA predicted block based on the INTRA mode of the block, the encoding module has "4" possible options for the block: no LFNST; LFNST with the first transform kernel of the identified LFNST set; LFNST with the second transform kernel of the identified LFNST set; LFNST with the third transform kernel of the identified LFNST set. The determination of the best option for the block may be based on a rate distortion optimisation. In some examples, the complexity of LFNST comes essentially from this rate distortion optimisation, and this complexity prevents the use of LFNST in many cases.

In examples, the two stages transform (e.g., the primary transform (for instance a DCT-II) and the secondary transform (LFNST)) may be replaced by a single separable transform called NSPT (Non-SeParable Secondary Transform). NSPT defines a plurality of NSPT sets (e.g., each) comprising a plurality of transform kernels. For instance, in an implementation, NSPT defines "35" NSPT sets (e.g., each) comprising "3" transform kernels. As in LFNST, a (e.g., each) transform kernel has a given dimension. The determination of a NSPT set for a block may be based on the size of the block. Once the NSPT set is determined, the encoding module has "4" possible options for the block: no NSPT; NSPT with the first transform kernel of the identified NSPT set; NSPT with the second transform kernel of the identified NSPT set; NSPT with the third transform kernel of the identified NSPT set. The determination of the best option for the block may be based on a rate distortion optimisation. Again, the complexity of NSPT comes essentially from this rate distortion optimisation. This complexity prevents the use of NSPT in many cases. The transformed block is then quantized during a step 230. In some examples, the encoding module can skip the transform and apply quantization directly to the non-transformed residual signal. When the current block is coded according to an intra prediction mode, an intra prediction mode and the transformed and quantized residual block are encoded by an entropic encoder during a step 245. When the current block is encoded according to an inter prediction, when appropriate, a motion vector of the block is predicted from a prediction vector selected from a set of motion vectors corresponding to reconstructed blocks situated in the vicinity of the block to be coded. The motion information is next encoded by the entropic encoder during step 245 in the form of a motion residual and an index for identifying the prediction vector. The transformed and quantized residual block is encoded by the entropic encoder during step 245. In some examples, the encoding module can bypass both transform and quantization, i.e., the entropic encoding is applied on the residual without the application of the transform or quantization processes.

The quantized transform coefficients, as well as motion vectors and other syntax elements, such as picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filtering) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. If LFNST was applied on the current block on the encoder side, an inverse LFNST transform is applied between the inverse-quantization and an inverse primary transform. If NSPT was applied on the current block on the encoder side, an inverse NSPT transform replaces the primary and secondary transforms (for instance inverse DCT-II and inverse LFNST). Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). In some examples (e.g., for a given picture) the contents of the reference picture buffer 380 on the decoder 300 side may be identical to the contents of the reference picture buffer 280 on the encoder 200 side (e.g., for the same picture).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

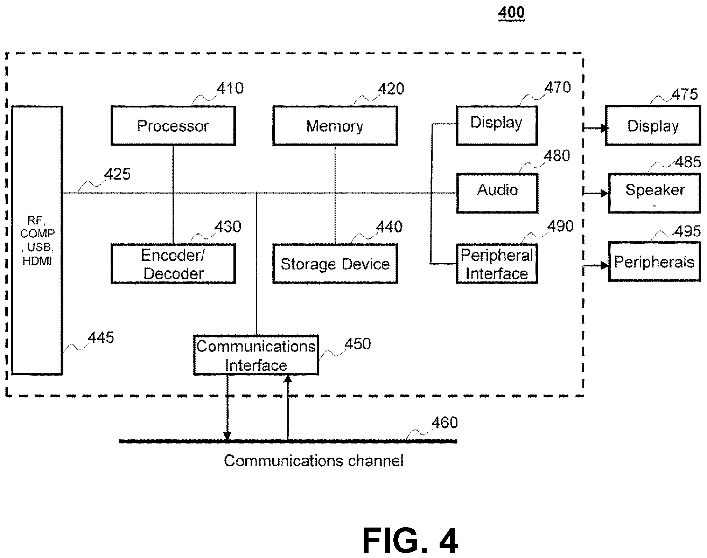

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example, obtaining a slice comprising a video block; determining a size of the video block; determining, based on a slice characteristic of the slice and the size of the video block, an inverse transform associated with the video block; determining, based on a slice characteristic of the slice and the size of the video block, an inverse transform technique (e.g., a non-separable inverse transform and/or a separable inverse transform) associated with the video block; determining, based on a slice characteristic of the slice and the size of the video block, whether to perform a non-separable inverse transform associated with the video block; performing an inverse transform associated with the video block; decoding the video block based on the determination of whether to perform the non-separable inverse transform associated with the video block; decoding the slice based on the inverse transform associated with the video block; performing a non-separable inverse transform associated with the video block; based on a determination that the slice type of the slice is a predicted slice (P-slice) or a bidirectional slice (B-slice) and a determination that the size of the video block is less than a predetermined value, determining that a non-separable inverse transform associated with the video block is to be performed; based on a determination that the slice type of the slice is a bidirectional slice (B-slice) instead of a predicted slice (P-slice) or an intra-slice (I-slice) and a determination that the size of the video block is less than a predetermined value, determining that a non-separable inverse transform associated with the video block is to be performed; based on a determination that the temporal depth associated with the slice is (equal to or) less than a value, and a determination that the size of the video block is less than a predetermined value, determining that a non-separable inverse transform associated with the video block is to be performed; based on a determination that the temporal depth associated with the slice is greater than (or equal to) a value, and a determination that the size of the video block is less than a predetermined value, determining that a non-separable inverse transform associated with the video block is not to be performed; based on a template layer associated with the slice, determining whether to perform a non-separable inverse transform associated with the video block; receiving a high-level syntax element indicator that indicates, for a video block that is to be inter-predicted, a non-separable inverse transform is to be used based on a size of the video block; receiving a second high-level syntax element that indicates, for a video block that is to be intra-predicted, a non-separable inverse transform is to be used based on a size of the video block that is to be intra-predicted, etc.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application, for example, obtaining a slice comprising a video block; determining a size of the video block; determining, based on a slice characteristic of the slice and the size of the video block, an transform associated with the video block; determining, based on a slice characteristic of the slice and the size of the video block, a transform technique (e.g., a non-separable transform and/or a separable transform) associated with the video block; determining, based on a slice characteristic of the slice and the size of the video block, whether to perform a non-separable transform associated with the video block; decoding the video block based on the determination of whether to perform the non-separable transform associated with the video block; performing the transform associated with the video block; encoding the video block based on the determined transform technique associated with the video block; encoding the slice based on the transform associated with the video block; performing a non-separable transform associated with the video block; based on a determination that the slice type of the slice is a predicted slice (P-slice) or a bidirectional slice (B-slice) and a determination that the size of the video block is less than a predetermined value, determining that a non-separable transform associated with the video block is to be performed; based on a determination that the slice type of the slice is a bidirectional slice (B-slice) instead of a predicted slice (P-slice) or an intra-slice (I-slice) and a determination that the size of the video block is less than a predetermined value, determining that a non-separable transform associated with the video block is to be performed; based on a determination that the temporal depth associated with the slice is (equal to or) less than a value, and a determination that the size of the video block is less than a predetermined value, determining that a non-separable transform associated with the video block is to be performed; based on a determination that the temporal depth associated with the slice is greater than (or equal to) a value, and a determination that the size of the video block is less than a predetermined value, determining that a non-separable transform associated with the video block is not to be performed; based on a template layer associated with the slice, determining whether the transform associated with the video block comprises a non-separable transform associated with the video block; sending a high-level syntax element indicator that indicates, for a video block that is to be inter-predicted, a non-separable transform is to be used based on a size of the video block; sending a second high-level syntax element that indicates, for a video block that is to be intra-predicted, a non-separable transform is to be used based on a size of the video block that is to be intra-predicted, etc.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, residual signals, metadata, coding or motion representation modes and related signals (e.g., ITMP-related flags, LIC-related flags), partitioning modes, reference pictures, motion vector predictors (MVPs), motion vector differences (MVDs), indices, candidate lists, prediction modes, merge modes, filter models, skip mode flag, IBC merge flag, prediction mode flag, intra mode flag, IBC mode flag, separate tree flag, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

Systems, methods, and instrumentalities are disclosed for a device configured for one or more of video coding (e.g., encoding and/or decoding), distribution, or consumption.

In examples, a device (e.g., a decoder for video decoding) may obtain a slice comprising a video block. The device may determine the size of the video block. The device may determine, based on a slice characteristic of the slice and the size of the video block, an inverse transform technique associated with the video block. The device may decode the video block based on the determined inverse transform technique associated with the video block. The inverse transform technique may include, for example, a separable inverse transform and/or a non-separable inverse transform associated with the video block.

In examples, the slice characteristic of the slice may include a slice type. The device, based on a determination that the slice type of the slice is a predicted slice (P-slice) or a bidirectional slice (B-slice) and a determination that the size of the video block is less than a predetermined value, may determine that a non-separable inverse transform associated with the video block is to be performed.

In examples, wherein the slice characteristic of the slice may include a slice type. The device, based on a determination that the slice type of the slice is a bidirectional slice (B-slice) instead of a predicted slice (P-slice) or an intra-slice (I-slice) and a determination that the size of the video block is less than a predetermined value, may determine that a non-separable inverse transform associated with the video block is to be performed.

In examples, the slice characteristic of the slice may include a temporal depth associated with the slice. The device, based on a determination that the temporal depth associated with the slice is less than a value, and a determination that the size of the video block is less than a predetermined value, may determine that a non-separable inverse transform associated with the video block is to be performed.

In examples, the slice characteristic of the slice may include a temporal depth associated with the slice. The device, based on a determination that the temporal depth associated with the slice is equal to or greater than a value, and a determination that the size of the video block is less than a predetermined value, may determine that a non-separable inverse transform associated with the video block is not to be performed. In some examples, the slice characteristic of the slice may include a template layer associated with the slice.

In examples, the device may receive a high-level syntax element indicator that indicates, for a video block that is to be inter-predicted, a non-separable inverse transform is to be used based on a size of the video block. The high-level syntax element indicator may be a first high-level syntax element indicator. The device may receive a second high-level syntax element that indicates, for a video block that is to be intra-predicted, a non-separable inverse transform is to be used based on a size of the video block that is to be intra-predicted.

In examples, a device (e.g., an encoder for video encoding) may obtain a slice comprising a video block. The device may determine the size of the video block. The device may determine, based on a slice characteristic of the slice and the size of the video block, a transform technique associated with the video block. The device may encode the slice based on the determined transform technique associated with the video block. The transform technique may include, for example, a separable transform and/or a non-separable transform associated with the video block.

In examples, the slice characteristic of the slice may include a slice type. The device, based on a determination that the slice type of the slice is a predicted slice (P-slice) or a bidirectional slice (B-slice) and a determination that the size of the video block is less than a predetermined value may determine that a non-separable transform associated with the video block is to be performed.

In examples, wherein the slice characteristic of the slice may include a slice type. The device, based on a determination that the slice type of the slice is a bidirectional slice (B-slice) instead of a predicted slice (P-slice) or an intra-slice (I-slice) and a determination that the size of the video block is less than a predetermined value, may determine that a non-separable transform associated with the video block is to be performed.

In examples, the slice characteristic of the slice may include a temporal depth associated with the slice. The device, based on a determination that the temporal depth associated with the slice is less than a value, and a determination that the size of the video block is less than a predetermined value, may determine that a non-separable transform associated with the video block is to be performed.

In examples, the slice characteristic of the slice may include a temporal depth associated with the slice. The device, based on a determination that the temporal depth associated with the slice is equal to or greater than a value, and a determination that the size of the video block is less than a predetermined value, may determine that may determine that a non-separable transform associated with the video block is not to be performed. In some examples, the slice characteristic of the slice may include a template layer associated with the slice.

In examples, the device may send a high-level syntax element indicator that indicates, for a video block that is to be inter-predicted, a non-separable transform is to be used based on a size of the video block. The high-level syntax element indicator may be a first high-level syntax element indicator. The device may send a second high-level syntax element that indicates, for a video block that is to be intra-predicted, a non-separable transform is to be used based on a size of the video block that is to be intra-predicted.

In examples, forward LFNST may be applied after the DCT2 transform for intra coded blocks. In the decoder side, its inverse transform may be applied before the inverse DCT2 transform. This transform stage may be associated with high coding gain. In some examples, the trade-off for rate saving and encoding time may not be balanced in low delay configuration. LFNST may be disabled for low-delay B (LDB) and low-delay P (LDP) configurations and activated for all-intra (AI) and random access (RA) configuration.

In some examples, another transform stage may be added, e.g., non-separable secondary transform (NSPT). This stage may replace DCT2-LFNST stage, where a single non-separable transform is used. This may be permitted, for example, for some block sizes (e.g., only allowed for small block, since non-separable transform for large blocks requires huge memory and computation complexity).

Using LFNST matrices and/or the inclusion of NSPT, there may be better room for activating LFNST for low delay configuration. In one or more examples herein, LFNST/NSTP encoding time may be improved.

Low frequency non-separable transforms (LFNSTs) (e.g., secondary transforms that may be applied after one or more primary transform have been applied) and non-separable primary transforms (NSPTs) may be performed by video coding devices herein. The LFNST may include a number of LFNST sets (S) and candidates (C) extended to S=35 and C=3. The LFNST set (IfnstTrSetIdx) for a given intra mode (predModeIntra) may be derived according to the following formula:

For predModeIntra < 2, IfnstTrSetIdx is equal to 2

IfnstTrSetIdx = predModeIntra, for predModeIntra in [0,34]

IfnstTrSetIdx = 68 - predModeIntra, for predModeIntra in [35,66]

Three different kernels, LFNST4, LFNST8, and LFNST16, may be defined to indicate LFNST kernel sets, which may be applied to 4xN/Nx4 (N≥4), 8xN/Nx8 (N≥8), and MxN (M, N≥16), respectively. The kernel dimensions may be specified by:

$$(LFSNT4, LFNST8^*, LFNST16^*) = (16{\times}16, 32{\times}64, 32{\times}96)$$

The forward LFNST may be applied to top-left low frequency region, which may be called Region-Of-interest (ROI). If LFNST is applied, primary-transformed coefficients that exist in the region other than ROI may be zeroed out.

FIG. 5 illustrates an example of an ROI for LFNST16. LFNST 16 may include six 4x4 sub-blocks, which may be consecutive in scan order (zigzag-scan). Since the number of input samples are 96, transform matrix for forward LFNST16 may be Rx96. R may be chosen to be 32. 32 coefficients (two 4x4 sub-blocks) may be generated from forward LFNST16 accordingly, which may be placed in coefficient scan order as shown in FIG. 20.

FIG. 6 illustrates an example of an ROI for LFNST8. The forward LFNST8 matrix may be R×64. R may be chosen to be 32. The generated coefficients may be located in the same manner as with LFNST16.

The mapping from intra prediction modes to these sets is shown below in Tables 1A and 1B.

Table 1A: Mapping of intra prediction modes to LFNST set index

| Intra pred. mode | -14 | -13 | -12 | -11 | -10 | -9 | -8 | -7 | -6 | -5 | -4 | -3 | -2 | -1 | 0 |
|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 |
| Intra pred. mode | 18 | 19 | 20 | 21 | 22 | 23 | 24 | 25 | 26 | 27 | 28 | 29 | 30 | 31 | 32 |
| LFNST set index | 18 | 19 | 20 | 21 | 22 | 23 | 24 | 25 | 26 | 27 | 28 | 29 | 30 | 31 | 32 |
| Intra pred. mode | 50 | 51 | 52 | 53 | 54 | 55 | 56 | 57 | 58 | 59 | 60 | 61 | 62 | 63 | 64 |
| LFNST set index | 18 | 17 | 16 | 15 | 14 | 13 | 12 | 11 | 10 | 9 | 8 | 7 | 6 | 5 | 4 |

Table 1B: Mapping of intra prediction modes to LFNST set index

| Intra pred. mode | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| LFNST set index | 1 | 2 | 3 | 4 | 5 | 6 | 7 | 8 | 9 | 10 | 11 | 12 | 13 | 14 | 15 | 16 | 17 |
| Intra pred. mode | 33 | 34 | 35 | 36 | 37 | 38 | 39 | 40 | 41 | 42 | 43 | 44 | 45 | 46 | 47 | 48 | 49 |
| LFNST set index | 33 | 34 | 33 | 32 | 31 | 30 | 29 | 28 | 27 | 26 | 25 | 24 | 23 | 22 | 21 | 20 | 19 |
| Intra pred. mode | 65 | 66 | 67 | 68 | 69 | 70 | 71 | 72 | 73 | 74 | 75 | 76 | 77 | 78 | 79 | 80 | |
| LFNST set index | 3 | 2 | 2 | 2 | 2 | 2 | 2 | 2 | 2 | 2 | 2 | 2 | 2 | 2 | 2 | 2 | |

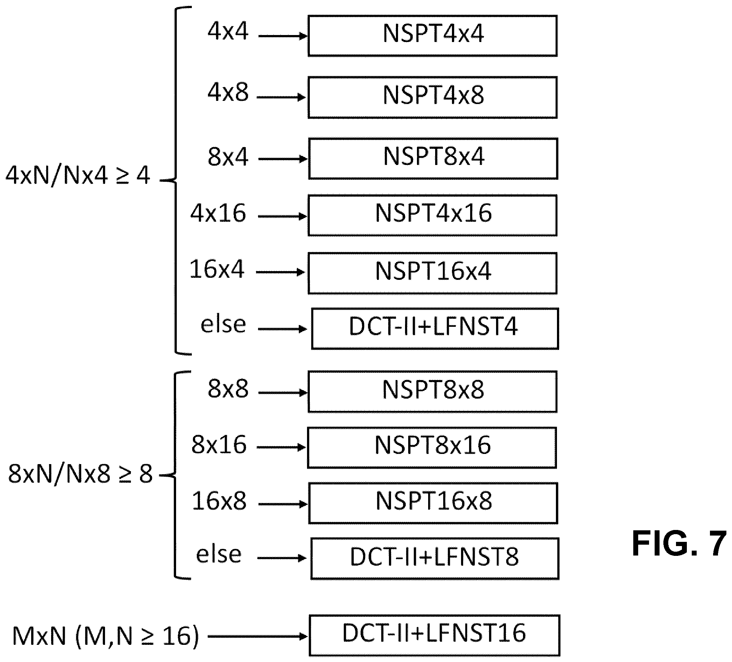

FIG. 7 illustrates an example NSPT that replaces the two stages of transform (DCT2-LFNST) by a non-separable transform (e.g., a single non-separable transform). This may (e.g., may only) be allowed for small blocks.

One or more (e.g., all) NSPTs may include 35 sets and 3 candidates (e.g., similar to the current LFNST). The kernels of NSPT may have at least one of the following shapes: NSPT4x4: 16x16; NSPT4x8/NSPT8x4: 32x20; NSPT8x8: 64x32; NSPT4x16/NSPT16x4: 64x24; or NSPT8x16/NSPT16x8: 128x40. Therefore, 12, 32, 40, and 88 coefficients may be zeroed-out using NSPT4x8/NSPT8x4, NSPT8x8, NSPT4x16/NSPT16x4, and NSPT8x16/NSPT16x8, respectively.

Inter LFNST/NSPT may be supported and/or used in one or more examples herein. To utilize LFNST/NSPT for inter coding, a virtual intra prediction mode (VIPM) may be employed. A (e.g., each) VIPM may represent a kind of feature, for example, a specific direction. The VIPM may be derived by applying a DIMD-like process, which is also used in MIP and IntraTMP, to the inter prediction block. The horizontal and vertical gradients of pixels inside the prediction block may be calculated (e.g., with Sobel operator), and the horizontal and vertical gradients of the (e.g., each) pixel may be used to derive a direction. The amplitudes of the gradient of the (e.g., each) pixel may be accumulated for the corresponding direction. The intra prediction mode corresponding to the strongest accumulation may be selected as the VIPM. With the VIPM, the transform set of LFNST/NSPT can be derived. For inter coding, the kernel mapping method described in one or more examples herein may be used (e.g., may be the same as that for intra LFNST/NSPT).

The distribution of inter LFNST/NSPT index may be different from that of intra LFNST/NSPT index. The signaling of inter LFNST/NSPT index may be different from that of intra LFNST/NSPT index. The intra LFNST/NSPT index binarization may employ two context coded bins (e.g., for each symbol). Truncated unary code with different context models may be used for inter LFNST/NSPT index coding.

In one or more examples herein, LFNST/NSPT may be limited to certain scenarios. Encoding time may be reduced.

For example, LFNST may be used for certain slices, temporal ID and/or surrounding blocks characteristics. LFNST may be enabled for cases where it is more probable that it provides significant gain. In the case of LFNST/NSPT enabled, the transform index may be coded as described in one or more examples herein. Otherwise, no syntax element may be used for LFNST/NSPT transforms and they may both be inferred to be deactivated.

LFNST/NSPT may be limited based on slice type(s). For I-slices, LFNST/NSPT may provide coding gain (e.g., LFNST and NSPT are intra based tools where the kernel selection depends on the intra mode. In some examples for non-I frames, it may be less efficient to use LFNST/NSPT. In examples, LFNST and NSPT may be selectable for blocks comprised in I-slices (e.g., only for blocks comprised in I-slices). In that case, LFNST and NSPT may be deactivated for non-I-slices. In examples, LFNST and NSPT may be selectable for blocks comprised in I-slices and P-slices (e.g., only for blocks comprised in I-slices and P-slices (P-slice is a slice wherein blocks are encoded either in intra or inter mono-directional mode)). In that case, LFNST and NSPT may be deactivated for B-slices (slices in which bi-prediction is allowed). In examples, a high-level syntax element may be signaled, for instance in a sequence parameter set (SPS), to indicate that LFNST or NSPT is deactivated for non-I slices (respectively for B-slices). In one or more examples, the above restrictions may be applied separately to inter LFNST/NSPT. In that case, a separate SPS flag may be used to specify the usage of inter LFNST/NSPT according to the slice type. In some examples, a total of two high level syntax elements may be used, one for intra LFNST/NSPT and one for inter LFNST/NSPT.

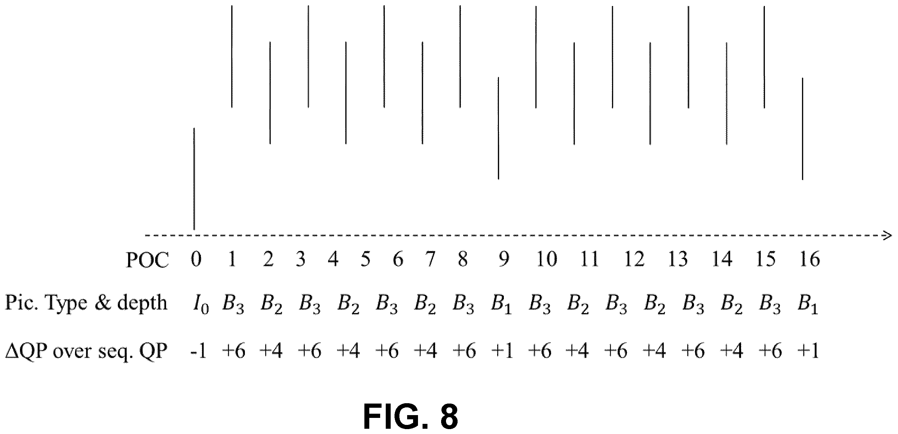

LFNST/NSPT may be limited based on the picture/slice temporal depth. Group Of Picture structure may be employed as illustrated by FIG. 8 (e.g., in the LDB and LDP coding configuration). Group Of Picture (GoP) structure employed in low delay coding configurations. In this example, successive pictures may be assigned a quantization parameter (QP) which varies from picture to picture, making a rate allocation among different pictures of the GoP highly unequal. The QP of a picture may be set according to a virtual hierarchical arrangement between pictures. This virtual hierarchy assigns a temporal depth value to a picture (e.g., each picture), and the QP assigned to a given picture may depend on the picture's temporal depth value. For instance, on FIG. 8, picture type $B_3$ designates a B-picture with temporal depth value equal to "3" and picture type $B_2$ designates a B-picture with temporal depth value equal to "2". FIG. 8 also shows the QP assigned to a (e.g., each) picture temporal depth, relative to a sequence-level QP parameter. In some examples, the temporal depth value may not be signaled in the video data (e.g., may only be used at encoder side to organize the GOP structure). FIG. 8 illustrates an example of Group Of Picture (GoP) structure employed in low delay coding configurations.

In examples, the use of a non-separable transform (LFNST or NSPT) is activated/deactivated at picture level, through a LFNST/NSPT flag overriding mechanism. This overriding mechanism may include a signaling of a flag in the picture header indicating if a LFNST/NSPT usage flag signaled at the SPS level is overridden for a current picture concerned by the picture header or not. If overridden, a LFNST/NSPT usage flag may be signaled in the picture header, to indicate if LFNST/NSPT is used in the current picture. In some examples, if it is signaled that the SPS-level LFNST flag is overridden, the LFNST flag of current picture may be inferred (e.g., by the decoder as the opposite of SPS-level flag value). In examples, if it is signaled at the picture level that the SPS-level LFNST/NSPT flag is overridden, the value of the picture header level LFNST/NSPT usage flag may not be signaled but inferred at the inverse of the value of the SPS-level LFNST/NSPT usage flag. In examples, no picture header level LFNST/NSPT overriding flag may be signaled in the picture header, but a LFNST/NSPT usage flag may be systematically coded in the picture header. In examples, the use of a non-separable transform (LFNST or NSPT) and MTS may be activated/deactivated at picture level, for example, through a LFNST/NSPT and MTS flag overriding mechanism. This overriding mechanism may include signaling of a flag in the picture header indicating if a LFNST/NSPT and MTS usage flag signaled at the SPS level is overridden for a current picture concerned by the picture header or not. If overridden, a LFNST/NSPT usage flag may be signaled in the picture header, to indicate if LFNST/NSPT is used in the current picture or not. If overridden, explicit MTS and LFNST/NSPT usage flags may be signaled in the slice header. In examples, the overriding mechanism may happen at slice header level for MTS and/or LFNST coding parameters (e.g., the MTS and/or LFNST coding parameters at picture header level). An indicator (e.g., a flag) may indicate if MTS and/or LFNST usage flag is overridden in a given slice. If true, then MTS, explicit MTS, and/or LFNST flags may be signaled in the slice header, and they may override the values indicated in the SPS. In examples, the overriding mechanism (for LFNST/NSPT or for LFNST/NSPT and MTS) may happen at a slice header level. A slice header level flag may indicate if SPS level LFNST/NSPT usage flags (or SPS level LFNST/NSPT and MTS usage flags) are overridden in a given slice. If overridden, explicit MTS and LFNST/NSPT usage flags may be signaled in the picture header. In examples, the overriding mechanism (for LFNST/NSPT or for LFNST/NSPT and MTS) may happen at a picture parameter set (PPS) level. A PPS level flag may indicate if SPS level LFNST/NSPT usage flags (or SPS level LFNST/NSPT and MTS usage flags) are overridden in a picture referring to this PPS. If overridden, explicit MTS and LFNST/NSPT usage flags may be signaled in the PPS. In examples, the non-separable transforms (LFNST and NSPT) may be selectable in the plurality of transforms in steps 602 and 702 if: a value of a picture header level syntax element in picture header of a picture comprising the current block, a value of a slice header level syntax element in a slice header of a slice comprising the current block, or a value of a PPS level syntax element in a PPS to which refer the picture comprising the current block, indicates that LFNST and/or NSPT is allowed for the current block. In examples, one or more examples herein may be applied separately to inter LFNST/NSPT. In that case, a separate high-level syntax element may be used to specify the usage of inter LFNST/NSPT according to the picture/slice temporal depth. In some examples, multiple (e.g., a total of two) high level syntax elements may be used, for example, one for intra LFNST/NSPT and one for inter LFNST/NSPT.

LFNST/NSPT may be limited based on surrounding blocks. In non-I slices, LFNST/NSPT may be limited to certain blocks depending on the characteristics of blocks in a causal neighborhood of the current block. In examples, the non-separable transforms (LFNST and NSPT) may be selectable in the plurality of transforms in steps 602 and 702 based on a characteristic of at least one block in a causal neighborhood of the current block. In examples, LFNST and NSPT may be selectable for a current block if most of the block in a causal neighborhood of the current block are coded in intra, thus limiting the LFNST/NSTP usage to small proportion of blocks (e.g., where intra is used excessively). For example, LFNST and NSPT may be selectable for a current block if more than the half of the block in a causal neighborhood of the current block are coded in intra. In another example, LFNST and NSPT may be selectable for a current block if most of the blocks in a causal neighborhood of the current block are coded in inter, thus limiting LFNST/NSPT usage where the current block is difficult to encode and LFNST is expected to provide significant coding gain. In examples, a high-level syntax (for instance in SPS) element may indicate that LFNST/NSPT usage is based on a characteristic of at least one block in a causal neighborhood of the current block. In one or more examples as described herein, the complexity related to LFNST and NSPT may be limited by controlling on which block LFNST and NSPT can be applied. In examples, a separate high-level syntax element may be used to indicate if inter LFNST/NSPT is restricted according to the surrounding blocks. In examples, a separate high level syntax element may be used to indicate if the number of kernels is modified for inter LFNST/NSPT according to the surrounding blocks. In some examples, multiple (e.g., a total of two) high level syntax elements may be used, one for intra LFNST/NSPT and one for inter LFNST/NSPT.

The number of kernels may be reduced in one or more examples as described herein. An example to reduce the encoder time is to reduce the RD checks. In examples, the complexity of LFNST and NSPT may reduce in the encoding module by reducing the number of possible choices during the rate distortion optimization. This may be achieved by reducing the number of LFNST/NSPT kernels considered (e.g., selectable) for a current block during the rate distortion optimization. When the number of kernels is reduced, the corresponding signaling may be modified. For LFNST and/or NSPT, the transform index may be signaled (lfnst_idx) as a variable between 0 to 2 in examples and 0 to 3 in some examples. A value of 0 may indicate no LFNST/NSPT is used, while 1,2 and 3 may indicate which kernel is used. In some examples, the index may be signaled with 2 bits. In case that the number of kernels is reduced to 1, single bit may be used. Otherwise, truncated unary code may be used for 2 kernels. This is shown in Table 2.

Table 2 shows that the signaled bit may be reduced as the number of kernels is reduced. In one or more examples herein, different conditions for selecting the number of kernels may be described.

Table 2 examples of first bit and second bit to code the lfnstIdx regarding different cases

|  | LFNST/NSPT index | First bit | Second bit |
|---|---|---|---|
| Default case | 0 | 0 | 0 |
|  | 1 | 0 | 1 |
|  | 2 | 1 | 0 |
|  | 3 | 1 | 1 |
| 1 kernel allowed | 0 | 0 | - |
|  | 1 | 1 | - |
| 2 kernels allowed | 0 | 0 | - |
|  | 1 | 1 | 0 |
|  | 2 | 1 | 1 |

Table 2 shows a binarization of the index of the LFNST/NSPT transform of a LFNST/NSPT set. In Table 2, LFNST/NSPT index = 0 indicates no use of LFNST/NSPT. LFNST/NSPT index = 1 indicates a use of the first LFNST/NSPT kernel. LFNST/NSPT index = 2 indicates a use of the second LFNST/NSPT kernel. LFNST/NSPT index = 3 indicates a use of the third LFNST/NSPT kernel. As described in one or more examples herein, if the transform (e.g., all transform) of a LFNST/NSPT set are selectable, "2" bits may be required to encode the "4" possible choices. In case that the number of kernels is reduced to "1", a single bit may be used. Otherwise, truncated unary code may be used for "2" kernels as shown in Table 2.

The number of kernels may be determined based on slice types. In examples, the number of LFNST/NSPT kernels may be reduced to "1" or "2" for non-I slices. In examples, the number of LFNST/NSPT kernels may be reduced to "1" for B slices and to "2" for P slices. In examples, a high-level syntax element may be signaled (e.g., a SPS level flag) to indicate if the number of LFNST/NSPT kernels is modified according to the slice type. In examples, a separate high level syntax element may be used to indicate if the number of kernels is modified for inter LFNST/NSPT according to the slice type. In some examples, multiple (e.g., a total of two) high level syntax elements may be used, for example, one for intra LFNST/NSPT and one for inter LFNST/NSPT.

The number of kernels may be selected according to picture/slice temporal depth. In examples, the number of kernels used for LFNST/NSPT may be reduced to "1" or "2" based the temporal depth of the picture or slice comprising the current block as described in relation to FIG. 8. In examples, some picture header and/or slice header level syntax elements may be introduced so as to indicate the LFNST/NSPT kernels allowed in the picture or slice.

If the overriding of SPS parameters takes place at picture/slice header level, the number of LFNST/NSPT indices allowed in the current picture may be signaled (e.g., to configure the LFNST/NSPT complexity level to a potentially lower level than what is configure at SPS level. This high-level controlling feature may allow tuning the LFNST/NSPT usage (e.g., typically as a function of the temporal depth of the picture/slice).

In examples, a separate high level syntax element may be used to indicate if the number of kernels is modified for inter LFNST/NSPT according to the picture/slice temporal depth. In some examples, multiple (e.g., a total of two) high level syntax elements may be used, e.g., one for intra LFNST/NSPT and one for inter LFNST/NSPT.

The number of kernels may be selected based on surrounding blocks. In non-I slices, LFNST/NSPT number of kernels may be reduced depending on the surrounding CU's characteristics. In examples, one or more of the following options may be considered: LFNST/NSPT number of kernels is reduced to 2 or 1 if most of the surrounding are intra coded => thus limiting LFNST/NSTP usage to small proportion of blocks where intra is excessively used; or LFNST/NSPT number of kernels is reduced to 2 or 1 if most of the surrounding are inter coded => thus limiting LFNST/NSPT cases where the current block is difficult to encode and LFNST is expected to provide significant coding gain. In both cases, a high level syntax element may be used to indicate that the number of kernels of LFNST/NSPT is reduced according to the surrounding blocks.

In examples, a separate high level syntax element may be used to indicate if the number of kernels is modified for inter LFNST/NSPT according to the surrounding blocks. In some examples, multiple (e.g., a total of two) high level syntax elements may be used, e.g., one for intra LFNST/NSPT and one for inter LFNST/NSPT.

In examples, the number of kernels used for LFNST/NSPT may be reduced based on characteristics of blocks in a causal neighborhood of the current block. In some examples, the number of LFNST and NSPT kernels may be reduced to "2" or "1" for a current block if most of the block in a causal neighborhood of the current block are coded in intra, thus limiting the LFNST/NSTP complexity where intra is used excessively. For example, the number of LFNST and NSPT kernels may be reduced to "2" or "1" for a current block if more than the half of the block in a causal neighborhood of the current block are coded in intra. In some examples, the number of LFNST and NSPT kernels may be reduced to "2" or "1" if most of the blocks in a causal neighborhood of the current block are coded in inter, thus limiting the LFNST/NSTP complexity where the current block is difficult to encode and LFNST is expected to provide significant coding gain. In examples, a high-level syntax (for instance in SPS) element may indicate that the number of LFNST and NSPT kernels are reduced to "2" or "1" based on a characteristic of at least one block in a causal neighborhood of the current block. In examples, the number of selectable non-separable transforms may depend on the slice type of the slice comprising the current block, the temporal depth of the picture or the slice comprising the current block or on characteristics of blocks in a causal neighborhood of the current block.

In examples, the complexity of non-separable transforms may be reduced by reducing the dimension of the LFNST and NSPT kernels. The number of basis vectors in LFNST/NSPT kernels may be reduced in one or more examples herein. In examples, the encoding time may be reduced by reducing the dimension of the kernels in LFNST and NSPT on P-slices and B-slices. In a variant, the dimension of the kernels may be reduced on B-slices (e.g., only on B-slices). In another variant, it may be reduced for slices (e.g., only for slices) with the temporal depth value of 2 or more as depicted in FIG. 8. The dimensions of kernels for LFNST and NSPT may be respectively used as described in one or more examples herein. Smaller dimensions of kernels may be used (e.g., by zeroing out the last N basis vectors of kernels) on slices that are better predicted (e.g., B-slices) than others (e.g., I-slices).

The dimension of kernels may be determined based on picture/slice temporal depth. In one or more examples herein, the dimension of kernels used for LFNST/NSPT may be reduced according to the temporal depth of the current picture or slice. Below is an example on how the dimension of kernels may be reduced at different temporal depths.

Table 3 examples for the dimension of kernels reduced at different temporal depths

| Temporal depth | Kernel sizes |
|---|---|
| $I_0$ | (LFSNT4, LFNST8*, LFNST16*) = (16x16, 32x64, 32x96) |
| $B_1$ | (LFSNT4, LFNST8*, LFNST16*) = (12x16, 24x64, 24x96) |
| $B_2, B_3, ...$ | (LFSNT4, LFNST8*, LFNST16*) = (8x16, 16x64, 16x96) |

In one or more examples herein, some picture header and/or slice header level syntax element may be introduced so as to indicate the use of reduced dimension of LFNST/NSPT kernels in the current picture or slice. If the overriding of SPS parameters takes place at picture/slice header level, the number of LFNST/NSPT basis vectors allowed in the considered picture may be signaled (e.g., to configure the LFNST/NSPT complexity level to a lower level than what is configured at SPS level). This high-level controlling feature may allow tuning the LFNST/NSPT usage (e.g., as a function of the temporal depth of a picture/slice).

In examples the dimension of LFNST and NSPT kernels selectable for a current block may be reduced for P-slices and B-slices. In examples, the dimension of the LFNST and NSPT kernels selectable for a current block may be reduced for B-slices (e.g., only for B-slices). In examples, the dimensions of LFNST and NSPT kernels selectable for a current block may be reduced according to the temporal depth of the picture or slice comprising the current block. In examples, some picture header (respectively slice header) level syntax elements may be introduced so as to indicate the use of LFNST/NSPT kernels with reduced dimensions in the current picture (respectively slice). These syntax elements may override SPS level syntax elements defining LFNST/NSPT kernel dimensions. This overriding may allow controlling at the picture/slice header level the LFNST/NSPT kernel dimensions and/or the complexity of LFNST/NSPT. In examples, the dimension of the LFNST and NSPT kernels selectable for a current block may be reduced for (e.g., only for) slices with the temporal depth value of "2" or more as depicted in FIG. 8. In examples, the selectable non-separable transforms may depend on the slice type of the slice comprising the current block, the temporal depth of the picture or the slice comprising the current block.

In examples, a separate high level syntax element may be used for inter LFNST/NSPT to indicate if the dimensions of the kernels is modified for inter LFNST/NSPT according to the picture/slice temporal depth. In some examples, multiple (e.g., a total of two) high level syntax elements may be used, e.g., one for intra LFNST/NSPT and one for inter LFNST/NSPT.

Implicit LFNST may be implemented. Reducing the LFNST/NSPT complexity while maintaining good performance compared to a full search on the LFNST/NSPT kernels may be achieved by an implicit obtaining of the LFNST/NSPT characteristics. This approach called *implicit LFNST/NSPT* in one or more examples herein may include inferring the LFNST/NSPT kernel (e.g., the best LFNST/NSPT kernel) for a current block via information known on the decoder side. The encoder may benefit from the (e.g., all) LFNST/NSPT options while limiting the number of options considered in the rate distortion optimization.

Alternating between different LFNST options for consecutive intra prediction modes may be used. In examples, the LFNST index may be computed as a modulo of the intra prediction mode.

In examples, the LFNST/NSPT kernel may be determined as a modulo of the intra prediction mode of a current block. For instance, The LFNST (respectively NSPT) kernel represented by an index *lfnsf_idx* (respectively *nspt_idx*) may be determied as the intra prediction mode of the current block *intramode* modulo a total number of LFNST (respectively NSPT) kernels *num_kernel*: $lfnsf\_idx = intramode \% num\_kernel + 1$; $nspf\_idx = intramode \% num\_kernel + 1$, where "%" represents the modulo operation. The number of LFNST/NSPT kernels *num_kernel* is equal to "3" in last versions of LFNST/NSPT, +1 is added because "0" means LFNST/NSPT is not used, and "1" to *num_kernel* are the index of first to last LFNST/NSPT kernels. The index *lfnsf_idx* (resp. *nspf_idx*) may be coded using a single bit to signal if LFNST (resp. NSPT) is enabled or not for the current block. On the decoder side, the LFNST (resp. NSPT) kernel index may be recovered using the intra prediction mode as in the encoder. In examples, the number of LFNST/NSPT kernels *num_kernel* may be reduced from "3" to "2" or "1". The encoder may check one or two kernels for an intra mode (e.g., for each intra mode), instead of all kernels. This may reduce the encoder complexity while keeping the performance high as the (e.g., all) kernels are tested for different intra mode. In examples, a high-level syntax element may be signaled (typically as a SPS flag in a SPS) to indicate if implicit LFNST/NSPT is enabled for blocks referring to this SPS.

In a variant, a separate high level syntax element may be used to indicate if the inter LFNST/NSPT kernel is selected according to the value of the virtual intra prediction mode (e.g., the VIPM as described in one or more examples herein). In some examples, multiple (e.g., a total of two) high level syntax elements may be used, e.g., one for intra LFNST/NSPT and one for inter LFNST/NSPT.

Implicit LFNST may be implemented using intra prediction mode. In examples, one or more (e.g., all) LFNST/NSPT options (including no LFNST/NSPT) may be distributed across consecutive intra modes. In this case, *lfnsf_idx* (resp. *nspf_idx*) may be determined as the intra prediction mode *intramode* modulo the total number of LFNST kernels *num_kernel* + 1.

The same operation may be performed on the decoder side and lfnst_idx may not be transmitted in the bitstream: $lfnst\_idx = intramode \% 3$, where 0 means not Lfnst/Nspt, 1 to 3 are the Lfnst/Nspt kernels.

In examples the number of LFNST kernels to be distributed may be be reduced from 3 to 2 or 1. In one or more examples herein, a high-level syntax element is signaled (e.g., SPS flag) to indicate if implicit LFNST is enabled.

In examples, a separate high level syntax element may be used to indicate if implicit LFNST/NSPT is used for inter LFNST/NSPT. In some examples, multiple (e.g., a total of two) high level syntax elements may be used, e.g., one for intra LFNST/NSPT and one for inter LFNST/NSPT.

Implicit LFNST may be used based on certain slice type(s). In examples, implicit LFNST may be enabled (e.g., only enabled) for non-I slices. In examples, implicit LFNST may be enabled (e.g., only enabled) for P-slices and disabled for B-slices. In examples, implicit LFNST may be enabled based on the picture or slice temporal depth. In examples, a high-level syntax element may be signaled (e.g., SPS flag in a SPS) to indicate the use of implicit LFNST for certain picture or slice types. The use of implicit LFNST may be inferred at the picture level based on the picture temporal depth or at the slice level based on the slice type or on the slice temporal depth. No additional signaling may be required at picture or slice level.

In a variant, a separate high level syntax element is used to indicate if implicit inter LFNST/NSPT is used for certain slice types. In some examples, multiple (e.g., a total of two) high level syntax elements may be used, e.g., one for intra LFNST/NSPT and one for inter LFNST/NSPT.

LFNST/NSPT may be restricted to some block sizes. The encoder complexity may be reduced by limiting the usage of LFNST/NSPT to some block sizes. For instance, LFNST/NSPT may be enabled for (e.g., only for) block of width (e.g., < 16) and/or height (e.g., < 16).

LFNST/NSPT may be restricted to some block sizes according to the slice type. For I-slices, using LFNST/NSPT for various (e.g., all) block sizes may provide coding gain. LFNST/NSPT are intra based tools where the kernel selection depends on the intra mode. For non-I frames, restricting the usage of LFNST/NSPT to some block sizes may save runtime while having a lower impact on the performance.

In examples, the usage of LFNST/NSPT may be limited to some block sizes (e.g., only for non-I slices). In some examples, it may be limited to some block sizes for B-slices (e.g., only limited to some block sizes for B-slices). B slices may be better predicted (e.g., compared to P-slices) as bi-directional prediction is allowed. In one or more examples as described herein, a high level syntax element may be signaled (e.g., SPS flag) to indicate that the non-separable transform is deactivated for non-I slices. In some examples, a separate high level syntax element may be used to indicate if inter LFNST/NSPT is restricted to some block sizes according to the slice types. In some examples, multiple (e.g., a total of two) high level syntax elements may be used, e.g., one for intra LFNST/NSPT and one for inter LFNST/NSPT.

LFNST/NSPT may be restricted to some block sizes according to the temporal depth. In examples, the usage of LFNST/NSPT may be restricted to some block size as described in one or more examples herein, according to the temporal depth of the current picture or slice. In examples, some picture header and/or slice header level syntax element may be introduced so as to indicate the block sizes allowed for LFNST/NSPT in the current picture or slice. If the overriding of SPS parameters takes place at picture/slice header level, the block sizes allowed for LFNST/NSPT in the considered picture may be signaled, for example, to configure the LFNST/NSPT complexity level to a potentially lower level than what is configure at SPS level. This high-level controlling feature may allow tuning the LFNST/NSPT usage, (e.g., as a function of the temporal depth of the picture/slice). In examples, a separate high level syntax element may be used to indicate if inter LFNST/NSPT is restricted to some block sizes according to the picture/slice temporal depth. In some examples, multiple (e.g., a total of two) high level syntax elements may be used, e.g., one for intra LFNST/NSPT and one for inter LFNST/NSPT.

The temporal depth of the current frame may indicate the number of inter frames that use the current frame as reference (e.g., the higher the temporal depth, the less often the frames of that higher temporal depth may be used as reference). In some examples, by disabling LFNST/NSPT for higher temporal depth (e.g., only in high temporal depth) may save run time (e.g., by disabling LFNST/NSPT for some frames) while having less impact on error propagation (lower performance loss). In examples, LFNST/NSPT may not be applied to certain temporal depth (e.g., temporal depth greater than a certain value).

In some examples, LFNST/NSPT may be disabled for chroma. If dual tree is enabled in the current picture, LFNST/NSPT may be applied to the chroma component of the block using the same lfnstIdx as the luma component. In examples, the usage of LFNST/NSPT may be disabled for the chroma component, for example, to reduce the complexity. A high-level syntax element may be used to indicate if LFNST/NSPT is restricted to luma (e.g., only to Luma) or is applied to both Luma and chroma.

In examples, LFNST/NSPT may be restricted to some block sizes according to the temporal layer of a current picture. In some examples, temporal depth information may be signaled to, for example, the decoder. Temporal layer may be determined, for example, by the decoder. In examples, LFNST/NSPT may not be applied to certain temporal depth (e.g., temporal layer higher than a certain value). LFNST/NSPT may be applied to certain temporal depth (e.g., temporal layer lower than a certain value). In case of random access configuration, temporal layer may be signaled (or coded) in a picture header. When this temporal layer value is above a certain threshold, it may be used to disable non-separable transform (for certain block sizes).

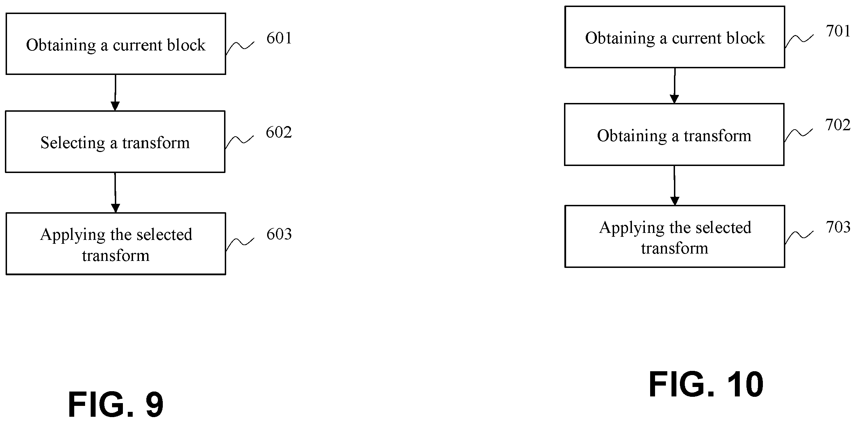

FIG. 9 represents schematically an example of allowing reducing a complexity of LFNST and NSPT in an encoding module.

The process of FIG. 9 is for example executed by the processing module 410 of the system 400. The process of FIG. 9 is for example executed before the step of transforming 225.

In a step 601, the processing module 410 obtains a current block to transform. The block is for instance a residual block resulting from an intra prediction.

In a step 602, the processing module 410 selects a transform to be applied to the current block in a set of selectable transforms of plurality of transforms comprising at least one non-separable transform, i.e., comprising LFNST and/or NSPT. For instance, the plurality of transforms comprises a DCT-II, a DCT-VIII, a DST-VII and LFNST and/or NSPT. In examples, a (e.g., each) selectable transform in the plurality is successively tested in a rate distortion optimization to determine the best transform for the current block.

FIG. 10 represents schematically an example of allowing reducing a complexity of LFNST and NSPT in a decoding module.

**EP 4 633 154 A1**

The process of FIG.10 is for example executed by the processing module 410 of the system 400. The process of FIG. 10 is for example executed before the step of inverse transform 350.

In a step 701, the processing module 410 obtains a current block to inverse transform. The current block is for example an inverse quantized transformed residual.

In a step 702, the processing module 410 determines the inverse transform to be applied to the current block in a set of selectable inverse transforms of a plurality of inverse transforms comprising at least one non-separable inverse transform, i.e., comprising an inverse LFNST and/or an inverse NSPT. For instance, the plurality of inverse transforms comprises an inverse DCT-II, an inverse DCT-VIII, an inverse DST-VII and an inverse LFNST and/or an inverse NSPT.

In a step 703, the processing module applies the determined inverse transform to the current block.

A decoder may determine, based on a slice characteristic of the slice and the size of the video block, an inverse transform technique associated with the video block. Decoding tools and techniques (e.g., as illustrated in FIG. 3) including, for example, one or more of entropy decoding, inverse quantization, inverse transformation, and differential decoding may be used to enable one or more examples as described herein in a decoder. For example, these decoding tools and techniques may be used to enable one or more of: obtaining a slice comprising a video block; determining a size of the video block; determining, based on a slice characteristic of the slice and the size of the video block, an inverse transform associated with the video block; determining, based on a slice characteristic of the slice and the size of the video block, an inverse transform technique (e.g., a non-separable inverse transform and/or a separable inverse transform (e.g., inverse transform other than LFNST/NSTP)) associated with the video block; determining, based on a slice characteristic of the slice and the size of the video block, whether to perform a non-separable inverse transform associated with the video block; performing an inverse transform associated with the video block; decoding the video block based on the determination of whether to perform the non-separable inverse transform associated with the video block; decoding the video block based on the determined inverse transform technique associated with the video block; decoding the slice based on the inverse transform associated with the video block; performing a non-separable inverse transform associated with the video block; based on a determination that the slice type of the slice is a predicted slice (P-slice) or a bidirectional slice (B-slice) and a determination that the size of the video block is less than a predetermined value, determining that a non-separable inverse transform associated with the video block is to be performed; based on a determination that the slice type of the slice is a bidirectional slice (B-slice) instead of a predicted slice (P-slice) or an intra-slice (I-slice) and a determination that the size of the video block is less than a predetermined value, determining that a non-separable inverse transform associated with the video block is to be performed; based on a determination that the temporal depth associated with the slice is (equal to or) less than a value, and a determination that the size of the video block is less than a predetermined value, determining that a non-separable inverse transform associated with the video block is to be performed; based on a determination that the temporal depth associated with the slice is greater than (or equal to) a value, and a determination that the size of the video block is less than a predetermined value, determining that a non-separable inverse transform associated with the video block is not to be performed; based on a template layer associated with the slice, determining whether to perform a non-separable inverse transform associated with the video block; receiving a high-level syntax element indicator that indicates, for a video block that is to be inter-predicted, a non-separable inverse transform is to be used based on a size of the video block; receiving a second high-level syntax element that indicates, for a video block that is to be intra-predicted, a non-separable inverse transform is to be used based on a size of the video block that is to be intra-predicted; etc.

An encoder may determine, based on a slice characteristic of the slice and the size of the video block, a transform technique associated with the video block. Encoding tools and techniques (e.g., as illustrated in FIG. 2) including one or more of quantization, entropy coding, inverse quantization, inverse transformation, and differential coding may be used to enable one or more examples as described herein in the encoder. For example, these encoding tools and techniques may be used to enable one or more of: obtaining a slice comprising a video block; determining a size of the video block; determining, based on a slice characteristic of the slice and the size of the video block, an transform associated with the video block; determining, based on a slice characteristic of the slice and the size of the video block, a transform technique (e.g., a non-separable transform and/or a separable transform (e.g., transform other than LFNST/NSTP)) associated with the video block; determining, based on a slice characteristic of the slice and the size of the video block, whether to perform a non-separable transform associated with the video block; decoding the video block based on the determination of whether to perform the non-separable transform associated with the video block; performing the transform associated with the video block; encoding the video block based on the determined transform technique associated with the video block; encoding the slice based on the transform associated with the video block; performing a non-separable transform associated with the video block; based on a determination that the slice type of the slice is a predicted slice (P-slice) or a bidirectional slice (B-slice) and a determination that the size of the video block is less than a predetermined value, determining that a non-separable transform associated with the video block is to be performed; based on a determination that the slice type of the slice is a bidirectional slice (B-slice) instead of a predicted slice (P-slice) or an intra-slice (I-slice) and a determination that the size of the video block is less than a predetermined value, determining that a non-separable transform associated with the video block is to be performed; based on a determination that the temporal depth associated

24

with the slice is (equal to or) less than a value, and a determination that the size of the video block is less than a predetermined value, determining that a non-separable transform associated with the video block is to be performed; based on a determination that the temporal depth associated with the slice is greater than (or equal to) a value, and a determination that the size of the video block is less than a predetermined value, determining that a non-separable transform associated with the video block is not to be performed; based on a template layer associated with the slice, determining whether the transform associated with the video block comprises a non-separable transform associated with the video block; sending a high-level syntax element indicator that indicates, for a video block that is to be inter-predicted, a non-separable transform is to be used based on a size of the video block; sending a second high-level syntax element that indicates, for a video block that is to be intra-predicted, a non-separable transform is to be used based on a size of the video block that is to be intra-predicted; etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A device for video decoding, comprising:
   a processor configured to:

   obtain a slice comprising a video block;
   determine a size of the video block;
   determine, based on a slice characteristic of the slice and the size of the video block, an inverse transform technique associated with the video block; and
   decode the video block based on the determined inverse transform technique associated with the video block.

2. The device of claim 1, wherein the slice characteristic of the slice comprises a slice type, wherein, based on a determination that the slice type of the slice is a predicted slice (P-slice) or a bidirectional slice (B-slice) and a determination that the size of the video block is less than a predetermined value, the processor is further configured to determine that a non-separable inverse transform associated with the video block is to be performed.

3. The device of claim 1, wherein the slice characteristic of the slice comprises a slice type, wherein, based on a determination that the slice type of the slice is a bidirectional slice (B-slice) instead of a predicted slice (P-slice) or an intra-slice (I-slice) and a determination that the size of the video block is less than a predetermined value, the processor is further configured to determine that a non-separable inverse transform associated with the video block is to be performed.

4. The device of claim 1, wherein the slice characteristic of the slice comprises a temporal depth based on a high level syntax indicator, wherein, based on a determination that the temporal depth is less than a value, and a determination that the size of the video block is less than a predetermined value, the processor is further configured to determine that a non-separable inverse transform associated with the video block is to be performed.

5. The device of claim 1, wherein the slice characteristic of the slice comprises a temporal depth based on a high level syntax indicator, wherein, based on a determination that the temporal depth is equal to or greater than a value, or a determination that the size of the video block is equal to or greater than a predetermined value, the processor is further configured to determine that a non-separable inverse transform associated with the video block is not to be performed.

6. The device of claim 1, wherein the slice characteristic of the slice comprises a temporal layer associated with the slice.

7. The device of claim 1, wherein the inverse transform technique includes at least one of a non-separable inverse transform or a separable inverse transform.

8. The device of any one of claims 1-7, wherein the processor is further configured to receive a high-level syntax element indicator that indicates, for a video block that is to be inter-predicted, a non-separable inverse transform is to be used based on a size of the video block.

9. The device of any one of claims 8, wherein the high-level syntax element indicator is a first high-level syntax element indicator, wherein the processor is further configured to receive a second high-level syntax element that indicates, for a video block that is to be intra-predicted, a non-separable inverse transform is to be used based on a size of the video block that is to be intra-predicted.

10. A device for video encoding, comprising:
a processor configured to:

obtain a slice comprising a video block;
determine a size of the video block;
determine, based on a slice characteristic of the slice and the size of the video block, a transform technique associated with the video block; and
encode the slice based on the determined transform technique associated with the video block.

11. The device of claim 10, wherein the slice characteristic of the slice comprises a slice type, wherein, based on a determination that the slice type of the slice is a predicted slice (P-slice) or a bidirectional slice (B-slice) and a determination that the size of the video block is less than a predetermined value, the processor is further configured to determine that a non-separable transform associated with the video block is to be performed.

12. The device of claim 10, wherein the slice characteristic of the slice comprises a temporal depth associated with the slice, wherein, based on a determination that the temporal depth associated with the slice is less than a value, and a determination that the size of the video block is less than a predetermined value, the processor is further configured to determine that a non-separable transform associated with the video block is to be performed.

13. A method for video decoding, comprising:

obtaining a slice comprising a video block;
determining a size of the video block;
determining, based on a slice characteristic of the slice and the size of the video block, an inverse transform technique associated with the video block; and
decoding the slice based on the determined inverse transform technique associated with the video block.

14. The method of claim 13, wherein the slice characteristic of the slice comprises a slice type, wherein the method further comprises, based on a determination that the slice type of the slice is a predicted slice (P-slice) or a bidirectional slice (B-slice) and a determination that the size of the video block is less than a predetermined value, determining that a non-separable inverse transform associated with the video block is to be performed.

15. A method for video encoding, comprising:

obtaining a slice comprising a video block;
determining a size of the video block;
determining, based on a slice characteristic of the slice and the size of the video block, an inverse transform technique associated with the video block; and
encoding the slice based on the determined inverse transform technique associated with the video block.

**FIG. 1A**

**FIG. 1B**

**FIG. 1C**

EP 4 633 154 A1

**FIG. 1D**

**200**

Pre-encoding processing 201

Image Partitioning 202

Transform 225

Quantization 230

Entropy Coding 245

Inverse Quantization 240

Inverse Transform 250

255

260 Intra prediction

In-loop Filters 265

Reference Picture Buffer 280

Motion Compensation 270

Motion Estimation 275

205

210

**FIG. 2**

**300**

**FIG. 3**

EP 4 633 154 A1

**FIG. 4**

FIG. 6

FIG. 5

EP 4 633 154 A1

$4xN/Nx4 \geq 4$

4x4 → | NSPT4x4 |

4x8 → | NSPT4x8 |

8x4 → | NSPT8x4 |

4x16 → | NSPT4x16 |

16x4 → | NSPT16x4 |

else → | DCT-II+LFNST4 |

$8xN/Nx8 \geq 8$

8x8 → | NSPT8x8 |

8x16 → | NSPT8x16 |

16x8 → | NSPT16x8 |

else → | DCT-II+LFNST8 |

MxN (M,N $\geq$ 16) → | DCT-II+LFNST16 |

**FIG. 7**

| POC | 0 | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| Pic. Type & depth | $I_0$ | $B_3$ | $B_2$ | $B_3$ | $B_2$ | $B_3$ | $B_2$ | $B_3$ | $B_1$ | $B_3$ | $B_2$ | $B_3$ | $B_2$ | $B_3$ | $B_2$ | $B_3$ | $B_1$ |
| $\Delta$QP over seq. QP | -1 | +6 | +4 | +6 | +4 | +6 | +4 | +6 | +1 | +6 | +4 | +6 | +4 | +6 | +4 | +6 | +1 |

**FIG. 8**

```
┌─────────────────────────┐
│ Obtaining a current block│ ⟋ 601
└─────────────────────────┘
            │
            ▼
┌─────────────────────────┐
│   Selecting a transform  │ ⟋ 602
└─────────────────────────┘
            │
            ▼
┌─────────────────────────┐
│   Applying the selected  │ ⟋ 603
│        transform         │
└─────────────────────────┘
```

**FIG. 9**

```
┌─────────────────────────┐
│ Obtaining a current block│ ⟋ 701
└─────────────────────────┘
            │
            ▼
┌─────────────────────────┐
│   Obtaining a transform  │ ⟋ 702
└─────────────────────────┘
            │
            ▼
┌─────────────────────────┐
│   Applying the selected  │ ⟋ 703
│        transform         │
└─────────────────────────┘
```

**FIG. 10**

Europäisches
Patentamt
European
Patent Office
Office européen
des brevets

# EUROPEAN SEARCH REPORT

Application Number

EP 24 30 5560

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/232230 A1 (LEE JIN HO [KR] ET AL) 21 July 2022 (2022-07-21) * paragraph [0313]; claims 21, 22 * | 1,8-10, 13,15 | INV. H04N19/12 H04N19/159 H04N19/174 |
| X | BONNINEAU (INTERDIGITAL) C ET AL: "AHG12: Adaptation of LFNST/NSPT for low-delay configuration", 30. JVET MEETING; 20230421 - 20230428; ANTALYA; (THE JOINT VIDEO EXPLORATION TEAM OF ISO/IEC JTC1/SC29/WG11 AND ITU-T SG.16 ), , no. JVET-AD0172 ; m62838 20 April 2023 (2023-04-20), XP030308895, Retrieved from the Internet: URL:https://jvet-experts.org/doc_end_user/documents/30_Antalya/wg11/JVET-AD0172-v2.zip JVET-AD0172-v2.docx [retrieved on 2023-04-20] * the whole document * | 1-15 | H04N19/176 H04N19/70 |
| A | US 2019/149828 A1 (JEONG JE CHANG [KR] ET AL) 16 May 2019 (2019-05-16) * paragraph [0184] - paragraph [0185] * | 1-15 | **TECHNICAL FIELDS SEARCHED (IPC)** H04N |

The present search report has been drawn up for all claims

| Place of search | Date of completion of the search | Examiner |
|---|---|---|
| Munich | 9 September 2024 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 633 154 A1

## ANNEX TO THE EUROPEAN SEARCH REPORT
## ON EUROPEAN PATENT APPLICATION NO.

EP 24 30 5560

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2024

| Patent document cited in search report | Publication date | Patent family member(s) | | Publication date |
|---|---|---|---|---|
| US 2022232230 A1 | 21-07-2022 | CN | 113892269 A | 04-01-2022 |
| | | KR | 20200138068 A | 09-12-2020 |
| | | US | 2022232230 A1 | 21-07-2022 |
| | | WO | 2020242238 A1 | 03-12-2020 |
| US 2019149828 A1 | 16-05-2019 | CN | 109155851 A | 04-01-2019 |
| | | EP | 3442231 A2 | 13-02-2019 |
| | | EP | 4030754 A1 | 20-07-2022 |
| | | JP | 2019515570 A | 06-06-2019 |
| | | JP | 2021052425 A | 01-04-2021 |
| | | KR | 20170124477 A | 10-11-2017 |
| | | KR | 20190111882 A | 02-10-2019 |
| | | KR | 20200074076 A | 24-06-2020 |
| | | KR | 20210065919 A | 04-06-2021 |
| | | KR | 20220057513 A | 09-05-2022 |
| | | KR | 20230104571 A | 10-07-2023 |
| | | US | 2019149828 A1 | 16-05-2019 |
| | | US | 2021014507 A1 | 14-01-2021 |
| | | US | 2023188727 A1 | 15-06-2023 |
| | | US | 2024107029 A1 | 28-03-2024 |
| | | WO | 2017192011 A2 | 09-11-2017 |

EPO FORM P0459

For more details about this annex : see Official Journal of the European Patent Office, No. 12/82